# DEMANDE DE BREVET EUROPEEN

(11) **EP 1 102 068 A1**
(43) Date de publication de la demande: **23.05.2001**
(21) Numéro de dépôt: 00410140.8
(22) Date de dépôt: 15.11.2000
(51) Int. Cl.: G01N 35/02

(54) **Analyseur biomédical à identification des tubes d'un module de stockage**

(30) Priorité: 16.11.1999 FR 9914348
(71) Demandeur: Maxmat SA, 34940 Montpellier Cedex 9 (FR)
(72) Inventeur: Chojnacki, André, 34940 Montpellier cedex 09 (FR); Randrianarivo, Jeanet, 34380 Saint Martin de Londres (FR)
(74) Mandataire: Hecké, Gérard

(57) **Abrégé**

Un analyseur biomédical comprenant un module de stockage 12 à plateau 14 de support des tubes d'échantillons et des tubes de réactifs formés par des tubes primaires standardisés, positionnés avec un décalage angulaire prédéterminé respectivement dans des trous 30 d'une première couronne 26 extérieure, et dans des trous 32, 34 d'au moins une deuxième couronne 28 interne concentrique. Un lecteur optique 42 unique est disposé à la périphérie du plateau 14 pour lire les étiquettes d'identification sur chaque tube d'échantillons et de réactifs. Le lecteur 42 est connecté à un circuit de commande 30 du mécanisme à moteur 36, et possède un axe de vision dirigé vers le centre de rotation du plateau 14 avec un faisceau lumineux de largeur inférieure à l'intervalle entre deux tubes d'échantillons 16 successifs de la première couronne 26, de manière à pouvoir balayer l'étiquette d'identification sur un tube réactif de la deuxième couronne 28.

## Description

### Domaine technique de l'invention

L'invention est relative à un analyseur biomédical comprenant:
- un module de stockage à plateau de support des tubes d'échantillons et des tubes de réactifs,
- un module de prélèvement pour transférer des quantités prédéterminées d'échantillons et de réactifs du plateau (14) vers une cuve réactionnelle d'un module d'analyse,
- un mécanisme à moteur pour l'entraînement du plateau vers une position prédéterminée autorisant l'aspiration des liquides d'échantillons et de réactifs par le module de prélèvement,
- et des moyens d'identification de la nature et du positionnement des tubes.

### Etat de la technique

Il est classique d'utiliser un lecteur de codes à barres pour opéré un contrôle de positionnement des tubes d'échantillons. Des étiquettes sont accolées sur les tubes pour effectuer leurs identification positives. Les liquides réactifs sont généralement dépourvus d'identification positive, et nécessitent la mise en oeuvre d'un tableau informatique qui précise leurs natures et leurs emplacements. Cette absence d'identification positive empêche un automatisme total sur le repérage de l'ensemble des tubes d'échantillons et de réactifs du plateau.

On a déjà proposé des analyseurs équipés de récipients spéciaux pour le remplissage des réactifs, et autorisant une identification positive par code à barres. Le contrôle de positionnement des récipients des réactifs nécessite alors l'adjonction d'un deuxième lecteur de code à barres, ce qui complique la mise en oeuvre du système et le coût de l'analyseur.

Le document EP-A-628822 décrit un analyseur biomédical utilisant un lecteur de code à barres pour la reconnaissance des tubes d'échantillons et des tubes de réactifs. La nature des tubes, le positionnement des étiquettes d'identification, et l'orientation du faisceau optique du lecteur ne sont pas décrits.

### Objet de l'invention

L'objet de l'invention consiste à réaliser un analyseur biomédical permettant de réaliser un système de contrôle fiable et simple pour une identification intégrale de la nature et du positionnement de l'ensemble des tubes échantillons et réactifs du plateau de stockage.

Le dispositif selon l'invention est caractérisé en ce
- les tubes d'échantillons et les tubes de réactifs sont formés par des tubes primaires standardisés, positionnés avec un décalage angulaire prédéterminé respectivement dans des trous d'une première couronne extérieure, et dans des trous d'au moins une deuxième couronne interne, laquelle est disposée concentriquement à l'intérieur de la première couronne,
- une étiquette d'identification est apposée sur chaque tube d'échantillons et de réactifs sensiblement à la même hauteur,
- un lecteur optique unique est disposé à la périphérie du plateau pour lire chaque étiquette d'identification lors du passage successif des tubes d'échantillons et de réactifs, ledit lecteur étant connecté à un circuit de commande du mécanisme à moteur, et ayant un axe de vision dirigé vers le centre de rotation du plateau avec un faisceau lumineux de largeur inférieure à l'intervalle entre deux tubes d'échantillons successifs de la première couronne, de manière à pouvoir balayer l'étiquette d'identification sur un tube réactif de la deuxième couronne interne.

Selon un mode de réalisation préférentiel, la première couronne externe comporte une série de 2n trous, tandis que la deuxième couronne interne comprend deux séries de n trous chacune, l'angle α entre deux tubes d'échantillons successifs étant égal à la moitié de l'angle 2∝ entre deux tubes réactifs de chaque série de la deuxième couronne. Le lecteur optique est formé par un lecteur de code à barres comportant un capteur photosensible CCD agencé pour autoriser une lecture à profondeur de champs variable correspondant au moins à la distance radiale entre les trois séries de tubes concentriques.

Selon une caractéristique de l'invention, le plateau rotatif est logé dans une enceinte isothermique équipée d'un dispositif de refroidissement pour maintenir les échantillons et les réactifs à une température adéquate de conservation. Le dispositif de refroidissement comprend des éléments à effet Peltier, et un dissipateur muni d'un réceptacle d'évacuation des condensats.

Le plateau roattif est surmonté avantageusement d'un couvercle présentant des orifices de passage pour les pipettes d'aspiration du module de prélèvement. Les deux couronnes du plateau sont amovibles séparément pour permettre un remplacement direct et facile avec d'autres couronnes porte-échantillons ou porte-réactifs.

Selon une autre caractéristique de l'invention, les tubes de réactifs ont une hauteur supérieure à celle des tubes échantillons.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés dans lesquels:
- la figure 1 est une vue schématique en perspective d'un analyseur biochimique selon l'invention ;
- la figure 2 montre une vue en plan du module de stockage de l'analyseur de la figure 1, le couvercle étant enlevé ;
- la figure représente une vue en coupe verticale du module de stockage équipé du couvercle ;
- la figure 4 est une vue de détail en perspective de l'analyseur de la figure 1.

### Description d'un mode de réalisation préférentiel

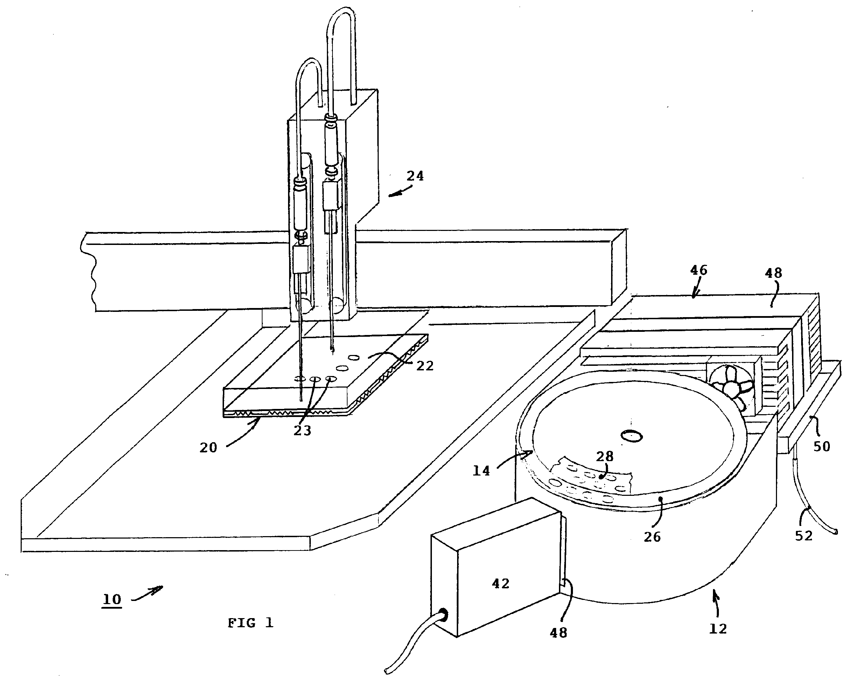

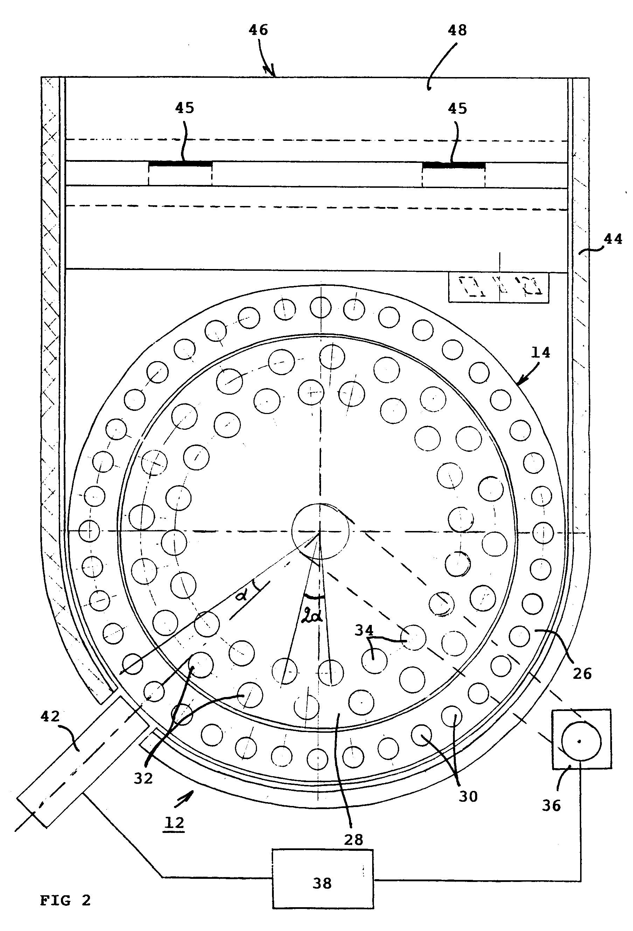

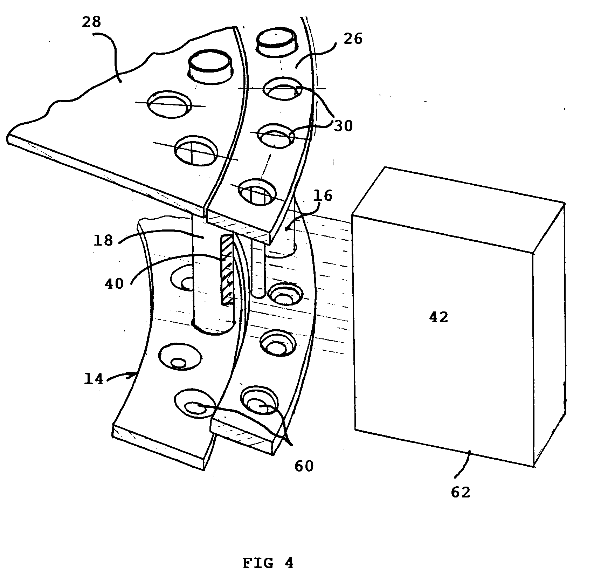

Sur les figures 1 à 4, un analyseur 10 biomédical est composé:
- d'un module de stockage 12 à plateau 14 rotatif de support des tubes d'échantillons 16 et des tubes de réactifs 18,
- d'un module d'analyse 20 formé par une cuve réactionnelle 22 à cupules 23 dans lesquelles s'effectue le mélange échantillon-réactif pour une analyse photométrique effectuée par un dispositif de mesure optique décrit dans la demande de brevet français N° 9712757 du 8/10/1998,
- et d'un module de prélèvement 24 pour transférer des quantités prédéterminées d'échantillons et de réactifs du plateau 14 vers la cuve réactionnelle 22, et en assurer le mélange dans les cupules 23.

Le plateau 14 du module de stockage 12 comporte une première couronne 26 externe supportant les tubes d'échantillons 16, renfermant notamment du sang, sérum, plasma, etc..., selon le type d'analyse à effectuer, et une deuxième couronne 28 interne concentrique portant les tubes de réactifs 18.

Les échantillons sont contenus d'une manière classique dans des tubes primaires formés par des éprouvettes standardisées de 5ml. Les réactifs sont conditionnés dans des tubes primaires standards de 10ml, ce qui permet directement de disposer d'un système d'identification analogue à celui des échantillons. Des adaptateurs de sections seront éventuellement prévus pour adopter des conditionnements de plus faibles volumes.

La première couronne 26 externe du plateau 14 est dotée d'une série de trous 30, par exemple quarante, répartis angulairement autour de la périphérie annulaire pour la réception des tubes d'échantillons 16. La deuxième couronne 28 interne est équipée de deux autres séries de trous 32, 34 disposés concentriquement à l'intérieur de la première couronne 26 pour le positionnement des tubes de réactifs 18. Chaque série de trous 32, 34 de la deuxième couronne 28 interne comporte par exemple vingt trous, c'est à dire la moitié du nombre de trous 30 de la première couronne 26 externe.

La mise en rotation du plateau 14 rotatif est assurée par un mécanisme d'entraînement à moteur pas à pas 36 piloté par un circuit de commande 38 à microprocesseur. Il en résulte un positionnement angulaire précis des tubes 16, 18 lors de l'opération d'aspiration des liquides d'échantillons et de réactifs effectuée par le module de prélèvement 24. Les deux couronnes 26, 28 sont amovibles séparément pour permettre un remplacement direct et facile avec d'autres couronnes porte-échantillons ou porte-réactifs. Un tel agencement évite l'opération fastidieuse de remplacement individuel des tubes.

Chaque tube d'échantillons 16 et chaque tube de réactifs 18 comporte une étiquette d'identification 40 du type code à barres, placée sensiblement à la même hauteur sur la surface latérale au voisinage de la base du tube. La disposition géométrique des tubes d'échantillons 16 et des tubes de réactifs 18 sur les deux couronnes 26, 28 concentriques rend accessibles les étiquettes d'identification 40 lors du passage devant un seul lecteur de code à barres 42 disposé à la périphérie de plateau 14.

Le plateau 14 rotatif est logé dans une enceinte 44 isothermique pour minimiser les échanges calorifiques avec l'extérieur. L'enceinte 44 est pourvue d'un dispositif de refroidissement 46 à effet Peltier pour maintenir les échantillons et les réactifs à une température adéquate de conservation.

Le lecteur de code à barres 42 est placé à l'extérieur de l'enceinte 44, devant un hublot 48 transparent autorisant la vision des parties inférieures des tubes 16, 1 8 où sont disposées les étiquettes d'identification 40. L'axe de vision du lecteur de code à barres 42 est dirigé vers le centre de rotation du plateau 14, et le faisceau de lecture balaie chaque étiquette d'identification 40 lors du passage successif des tubes.

La disposition des tubes primaires sur le plateau 14 est déterminée de telle sorte qu'entre deux tubes échantillons 16 situés sur la première couronne 26, un espace suffisant soit respecté pour que le faisceau lumineux du lecteur de code à barres 42 puisse atteindre un tube réactif 18 situé sur chaque série de la deuxième couronne 28. Les tubes de réactifs 18 ont une hauteur supérieure à celle des tubes échantillons 16.

Ainsi toutes les positions des tubes échantillons 16 et réactifs 18 peuvent être lues lors d'une rotation complète du plateau 14. Le lecteur de code à barre 42 comporte un capteur photosensible CCD transformant l'énergie lumineuse en énergie électrique proportionnelle.

Plusieurs impératifs techniques conditionnent la faisabilité du dispositif :
- la technologie du lecteur de code à barres 42 doit être choisie pour permettre une lecture à profondeur de champs variable correspondant au moins à la distance radiale entre les trois séries de tubes 16,18;
- la largeur du faisceau lumineux doit être compatible et inférieure avec l'écartement entre deux tubes échantillons 16 sous peine d'impossibilité de lecture, car le faisceau illumine simultanément trois étiquettes d'identification 40 à codes à barres;

Dans l'exemple de réalisation illustré aux dessins, l'angle ∝ entre deux tubes échantillons 16 successifs de la première couronne 26 est égal à 9°. Le diamètre de la première couronne 26 est de 225mm. L'angle 2∝. entre deux tubes réactifs 18 de chaque série 32, 34 de la deuxième couronne 28 est de 18°, c'est à dire le double du premier angle ∝. Les deux séries de trous 32, 34 concentriques de la deuxième couronne 28 interne sont imbriqués, tel que l'angle entre un trou 32 et un trou 34 soit égal à 9°. Le diamètre de la première série de trous 32 de la deuxième couronne 28 est de 180mm. Le diamètre de la deuxième série de trous 34 de la deuxième couronne 28 est de 140mm. La distance de séparation entre deux tubes échantillons 16 est de 4mm. Le faisceau de lecture du lecteur de code à barres 42 possède une largeur de l'ordre de 3,5mm et une divergence inférieure à 1°. La profondeur de champ du lecteur de code à barres 42 est compris entre 50mm et 90mm. De telles caractéristiques constructives permettent de lire avec un seul lecteur de code à barres 42, les étiquettes d'identification 40 de la totalité des tubes échantillons 16 et réactifs 18 sur les deux couronnes 26, 28.

Le lecteur de code à barres 42 est connecté électriquement au circuit de commande 38 à microprocesseur de manière à détecter la nature et le positionnement de chaque tube 16, 18. Toute modification ultérieure de la composition du plateau 14 est détectée en temps réel par le circuit de commande 38.

La configuration informatique du code à barres pour les étiquettes d'identification 40 est différente selon qu'il s'agit d'un tube échantillon 16, ou d'un tube réactif 18. L'algorithme dans le circuit de commande 38 à microprocesseur est prévu pour reconnaître toute absence de tubes échantillons 16 sur la première couronne 26 du plateau 14. Cette distinction entre les étiquettes 40 à code à barres permet :
- d'éviter toute lecture erronée du lecteur 42 si certains trous 30 de la première couronne 26 sont vides lors du passage du plateau 14 devant le lecteur 42,
- d'utiliser un plateau rotatif 14 très compact avec des décalages angulaires très réduits entre les différents trous 30 de la première couronne 26.

Le dispositif de refroidissement 46 de l'enceinte 44 comprend des éléments 45 à effet Peltier refroidissant l'intérieur à une température programmable autour de 9°C pour garantir une dégradation minimale des propriétés biochimiques des produits. En cas d'introduction d'air externe dans l'enceinte 44, le contact avec la circulation d'air froid interne peut provoquer des condensats sur le dissipateur 48. Pour éliminer cette humidité, le dissipateur 48 est légèrement incliné, et est muni d'un réceptacle 50 équipé d'une buse d'échappement 52 reliée à la pompe d'évacuation des déchets (non représentée). Cette disposition évite toute fuite indésirable.

Pour la protection du module de stockage 12 de l'environnement extérieur, et pour réduire l'effet d'une évaporation prématurée des liquides, le plateau 14 est surmonté d'un couvercle 54 qui présente des orifices 56 de passage pour les pipettes d'aspiration du module de prélèvement 24. A ce niveau, le contact avec l'extérieur se réduit à la surface totale de ces orifices 56. Dans un premier mode de réalisation, le couvercle 54 peut être solidaire du plateau 14 tournant, et comporte autant d'orifices 56 que de tubes échantillon/réactif 16, 18, c'est à dire quatre vingt.

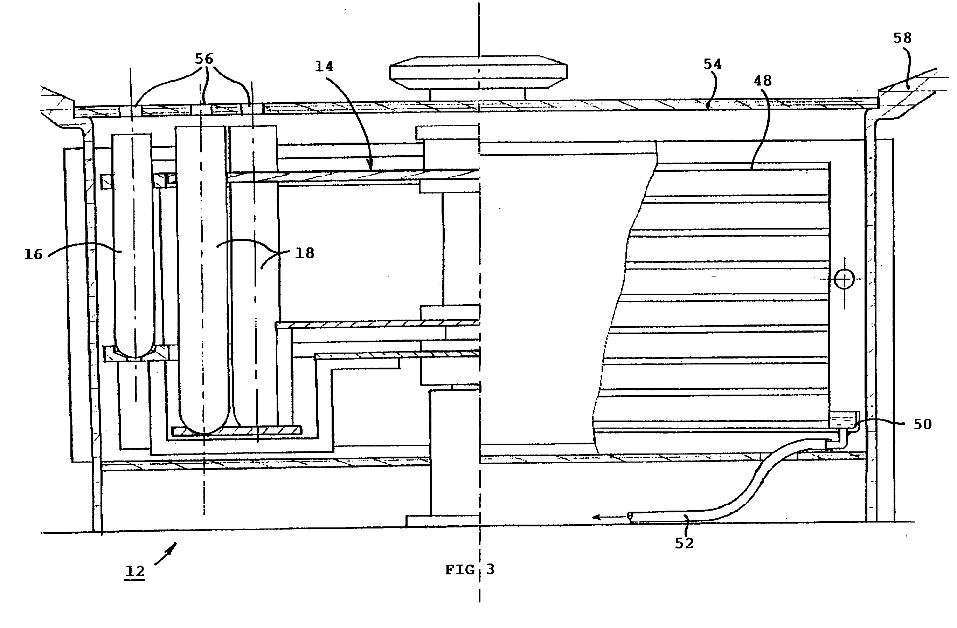

Dans variante de réalisation, le couvercle 54 prend appui sur le capot 58 interne du module de stockage 12, et devient non solidaire du plateau 14 rotatif (cas de la figure 3) Cette disposition permet de réduire la surface de contact avec l'extérieur à trois orifices 56 d'accès à trois tubes respectifs des séries de trous 30, 32, 34 pour chaque pas du mécanisme d'entraînement à moteur pas à pas 36.

Chaque tube 16 ou 18 doit être facilement amovible, mais en position enfoncée dans les trous 30, 32, 34 correspondants, il ne doit pas tourner sur lui-même au cours de la rotation du plateau 14. En effet, l'étiquette d'identification 40 du code à barres pourrait être occultée, rendant la lecture par le lecteur 42 impossible. Pour éviter ce problème, la base de chaque tube 16, 18 est engagée dans un trou 60 laminé dans un élément du plateau 14, ledit trou 60 ayant une profondeur et un diamètre appropriés pour assurer une bonne amovibilité tout en évitant les rotations intempestives.

Pour éviter toute condensation sur la face externe du hublot 48 susceptible de fausser l'identification des tubes 16, 18, le lecteur de code à barres 42 est confiné dans un boîtier 62 hermétique équipé directement du hublot 48 et renfermant des produits d'assèchement, notamment des sels d'absorption de l'humidité.

Il est clair que le capteur photosensible CCD du lecteur de code à barres 42 peut être remplacé par tout autre lecteur équivalent. Il en est de même des éléments à effet Peltier 45 qui peuvent être remplacés par tout autre moyen de refroidissement actif.

## Revendications

1. Analyseur biomédical comprenant:
- un module de stockage (12) à plateau (14) de support des tubes d'échantillons (16) et des tubes de réactifs (18),
- un module de prélèvement (24) pour transférer des quantités prédéterminées d'échantillons et de réactifs du plateau (14) vers une cuve réactionnelle (22) d'un module d'analyse (20),
- un mécanisme à moteur (36) pour l'entraînement du plateau (14) vers une position prédéterminée autorisant l'aspiration des liquides d'échantillons et de réactifs par le module de prélèvement (24),
- et des moyens d'identification de la nature et du positionnement des tubes (16, 18),
caractérisé en ce que
- les tubes d'échantillons (16) et les tubes de réactifs (18) sont formés par des tubes primaires standardisés, positionnés avec un décalage angulaire prédéterminé respectivement dans des trous (30) d'une première couronne (26) extérieure, et dans des trous (32, 34) d'au moins une deuxième couronne (28) interne, laquelle est disposée concentriquement à l'intérieur de la première couronne (26),
- une étiquette d'identification (40) est apposée sur chaque tube d'échantillons et de réactifs (16, 18) sensiblement à la même hauteur,
- un lecteur optique (42) unique est disposé à la périphérie du plateau (14) pour lire chaque étiquette d'identification (40) lors du passage successif des tubes d'échantillons et de réactifs (16, 18), ledit lecteur étant connecté à un circuit de commande (30) du mécanisme à moteur (36), et ayant un axe de vision dirigé vers le centre de rotation du plateau (14) avec un faisceau lumineux de largeur inférieure à l'intervalle entre deux tubes d'échantillons (16) successifs de la première couronne (26), de manière à pouvoir balayer l'étiquette d'identification (40) sur un tube réactif (18) de la deuxième couronne (28).

2. Analyseur biomédical selon la revendication 1, caractérisé en ce que la première couronne (26) externe comporte une série de 2n trous (30), tandis que la deuxième couronne (28) interne comprend deux séries de n trous (32, 34) chacune, l'angle ∝ entre deux tubes d'échantillons (16) successifs étant égal à la moitié de l'angle 2∝ entre deux tubes réactifs (18) de chaque série (32, 34) de la deuxième couronne (28).

3. Analyseur biomédical selon la revendication 1, caractérisé en ce que le plateau (14) rotatif est logé dans une enceinte (44) isothermique équipée d'un dispositif de refroidissement (46) pour maintenir les échantillons et les réactifs à une température adéquate de conservation.

4. Analyseur biomédical selon la revendication 3, caractérisé en ce que le lecteur optique (42) est formé par un lecteur de code à barres, lequel est placé à l'extérieur de l'enceinte (44) devant un hublot (48) transparent.

5. Analyseur biomédical selon la revendication 4, caractérisé en ce que le lecteur de code à barres (42) comporte un capteur photosensible CCD agencé pour autoriser une lecture à profondeur de champs variable correspondant au moins à la distance radiale entre les trois séries (30, 32, 34) de tubes 16, 18.

6. Analyseur biomédical selon la revendication 1, caractérisé en ce que les étiquettes d'identification (40) des tubes échantillons (16) ont une configuration informatique différente de celle des étiquettes des tubes réactifs, de manière à éviter toute lecture erronée si certains trous (30) de la première couronne (26) sont vides lors du passage devant le lecteur optique (42).

7. Analyseur biomédical selon la revendication 3, caractérisé en ce que le dispositif de refroidissement (46) de l'enceinte (44) comprend des éléments à effet Peltier (45), et un dissipateur (48) muni d'un réceptacle (50) équipé d'une buse (52) d'évacuation des condensats.

8. Analyseur biomédical selon la revendication 1, caractérisé en ce que le plateau (14) est surmonté d'un couvercle (54) présentant des orifices (56) de passage pour les pipettes d'aspiration du module de prélèvement (24).

9. Analyseur biomédical selon la revendication 1, caractérisé en ce que les deux couronnes (26, 28) sont amovibles séparément du plateau (14) pour permettre un remplacement direct et facile avec d'autres couronnes porte-échantillons ou porte-réactifs.

10. Analyseur biomédical selon l'une des revendications précédentes, caractérisé en ce que les tubes de réactifs (18) ont une hauteur supérieure à celle des tubes échantillons (16).
